# EUROPÄISCHE PATENTSCHRIFT

(11) **EP 3 245 139 B1**
(45) Veröffentlichungstag und Bekanntmachung des Hinweises auf die Patenterteilung: **15.09.2021**
(21) Anmeldenummer: 15820525.2
(22) Anmeldetag: 22.12.2015
(51) Int. Cl.: B65D 21/02, B65B 17/02, B65D 69/00, B65D 1/46

(54) **GEBINDE, AUSWEISEND BEHÄLTER MIT VERSTÄRKTEM WANDBEREICH**
CLUSTER PACK, COMPRISING CONTAINERS HAVING A REINFORCED WALL SECTION
EMABALLAGE COMPORTANT DES RÉCIPIENTS À RÉGION DE PAROI RENFORCÉE

(30) Priorität: 12.01.2015 DE 102015100346
(43) Veröffentlichungstag der Anmeldung: 22.11.2017
(73) Patentinhaber: KHS GmbH, 44143 Dortmund (DE)
(72) Erfinder: HAESENDONCKX, Frank, 22145 Hamburg (DE); ROMMEL, Christian, 23617 Stockelsdorf (DE)
(86) Internationale Anmeldenummer: PCT/EP2015/081065
(87) Internationale Veröffentlichungsnummer: WO 2016/113095

(56) Entgegenhaltungen:
- DE-B3-102011 109 956
- US-A- 3 388 791

## Beschreibung

Die Erfindung betrifft ein Gebinde mit mindestens zwei Behältern, aufweisend eine Behälterwand, die durch eine Klebstelle miteinander verbunden sind und ein Verfahren sowie eine Vorrichtung zum Herstellen eines solchen Gebindes.

US3388791 offenbart ein Gebinde mit Behältern gemäß dem Oberbegriff des Anspruchs 1.

Gattungsgemäße Behälter sind in der DE 10 2012 100 810 A1 offenbart. Die DE 102011 119 968 A1 und die DE 10 2011 109 956 B3 betreffen Behälter, die einen Ring oder Abrollring aufweisen, also einen umlaufenden Bereich der Behälterwand, der einen größeren Radius aufweist als die übrige Behälterwand. DE102011109956 offenbart auch ein Verfahren gemäß dem Oberbegriff des Anspruchs 8. Gattungsgemäße Behälter, die durch Klebstellen zu einem Gebinde verbunden sind, können beim Vereinzeln reißen, insbesondere dann, wenn sie durch Klebstellen in der unteren Hälfte der Behälter verbunden sind und die Hebelwirkung groß ist.

Diese Aufgabe wird gelöst mit einem Gebinde nach Anspruch 1 und mit einem Verfahren zum Herstellen des Gebindes nach Anspruch 8.

Erfindungsgemäß weist ein Gebinde mindestens zwei Behälter auf, die durch eine Klebstelle miteinander verbunden sind, dadurch gekennzeichnet, dass die Behälterwand im Bereich der Klebstelle oder angrenzend an die Klebstelle eine Wandverstärkung aufweist. Die Wandverstärkung setzt den beim Herauslösen eines Behälters aus einem Gebinde aufgebrachten Kräften einen größeren Widerstand entgegen, so dass ein Zerreißen des Behälters beim Herauslösen aus dem Gebinde zuverlässig vermieden wird. Die Wanderstärkung wird bevorzugt nur lokal angebracht, so dass ein insgesamt materialsparender Behälter bereitgestellt wird, um das erfindungsgemäße Gebinde herzustellen. Alternativ ist es aber auch möglich, die Wandverstärkung in dem vorgesehenen Bereich umlaufend an der Behälterwand vorzusehen.

Insbesondere Flaschen weisen einen Bereich mit einem größeren Außenwanddurchmesser auf als der zylindrische Grundkörper einer Wandflasche. Dieser Abrollring, der also einen größeren Außenwanddurchmesser, aber üblicherweise dieselbe Wandstärke aufweist wie der übrige Grundkörper, ist der Bereich, an dem andere Behälter anliegen oder Förder oder Führungswerkzeuge angreifen. Nach einer vorteilhaften Ausführung der Erfindung ist bei einem Gebinde mit Behältern, insbesondere Flaschen, die einen Abrollring aufweisen, der Klebepunkt bzw. die Klebstelle an einem Abrollring angeordnet. Das Anbringen oder Ausformen der Wandverstärkung an einem Abrollring verringert weiter die zum Herauslösen eines Behälters aus einem Gebinde erforderlichen Kräfte.

Behälter im Sinne der Erfindung sind Flaschen, Dosen, Tuben, Beutel, jeweils aus Metall, Glas, Kunststoff und/oder einem Materialverbund, typisch z. B. PET-Flaschen oder ein Materialverbund aus Kunststoff, Aluminiumfolie und Papier. Zu den Behältern im Sinne der Erfindung zählen alle Werkstoffe, insbesondere solche, die zum Abfüllen von flüssigen oder viskosen Produkten geeignet sind. Auch bereits zu Gruppen zusammengefasste Behälter (Mehrfachpacks) zählen zu den Behältern im Sinne der Erfindung. Die Behälter des Gebindes sind vorzugsweise in nicht-nestender Position angeordnet, dass heißt, die Behälter einer Reihe des Gebindes sind nicht in der Lücke einer benachbarten Reihe des Gebindes angeordnet.

Die erfindungsgemäßen Behälter können einen beliebigen Querschnitt aufweisen, oval, rund oder eckig. Die Form der Behälter kann beutel-, pyramiden- oder quaderförmig sein, ist aber häufig zylindrisch, entweder vollständig zylindrisch wie z. B. bei Dosen oder abschnittsweise zylindrisch, wie bei vielen Flaschen, die sich, ausgehend von einem zylindrischen Grundkörper, zur Öffnung hin verjüngen und/oder bei denen die Flasche am unteren Ende nur auf punktförmigen Stützbereichen steht, und bei denen dann die Flaschenwand an Übergangsabschnitten von den punktförmigen Stützbereichen zum Grundkörper hin in die zylindrische Flaschenwand übergeht. Ein Behälter weist eine Höhe auf, die gemessen wird vom unteren Ende, mit dem der Behälter auf einer Auflagefläche steht, bis zu einem oberen Ende, das in senkrechter Richtung am weitesten von der Auflagefläche entfernt ist, und dass meist die Öffnung des Behälters aufweist.

Um zu gewährleisten, dass die erfindungsgemäße Wandverstärkung ein Zerreißen des Behälters verhindert, ist es ausreichend, wenn die Behälterwand im Bereich der Wandverstärkung um mindestens 5% stärker ausgeführt ist, bevorzugt um mindestens 10%, vorteilhaft um mindestens 30%, insbesondere um mindestens 50%. Das jeweils zu wählende Ausmaß der Wandverstärkung wird der Fachmann in Abhängigkeit von der Größe und Form des Behälters sowie der Wanddicke auswählen. Je dicker die Behälterwand ist, desto geringer ist die erforderliche Wandverstärkung.

Die Wandverstärkung wird erfindungsgemäß abschnittsweise aufgebracht. Nach einer vorteilhaften Ausführung der Erfindung ist der Durchmesser der Wandverstärkung mindestens 3% größer als die Fläche der aufzubringenden Klebstelle. Bevorzugt ist der Durchmesser der Wandverstärkung mindestens 15% größer, vorzugsweise mindestens 15%, größer als die Fläche der aufzubringenden Klebstelle. Auch die Größe der abschnittsweise an der Behälterwand aufzubringenden Wandverstärkung bestätigt, dass die erfindungsgemäße Lösung wirtschaftlich ist, weil wenig Material benötigt wird. Eine erfindungsgemäße Wandverstärkung, deren Durchmesser größer ist als die Fläche der Klebstelle, vereinfacht das Aufbringen des Klebstoffs, weil größere Toleranzen vorgegeben werden können. Zum anderen verbessert ein größerer Durchmesser der Wandverstärkung die Kräfteverhältnisse beim Lösen des Behälters aus dem Gebinde. Nach einer vorteilhaften Ausführung der Erfindung kann ggf. ein größerer Durchmesser der Wandverstärkung mit einer geringeren Verstärkung der Behälterwand einhergehen. Gleiches gilt für eine weiter bevorzugte Ausführung der Behälterwand, bei der die Wandverstärkung eine um mindestens 3% größere Fläche aufweist als die auf der Wandverstärkung anzubringende Klebstelle.

Die Form der Wandverstärkung richtet sich zweckmäßig im Wesentlichen nach der Form der aufzubringenden Klebstelle. Die Wandverstärkung kann rund, oval oder eckig ausgebildet sein, sie haben dabei idealerweise eine plateauartige Form, idealerweise mit einer runden oder ovalen Grund- und Hochläche. Sie kann aber auch als umlaufende, ringförmige Wandverstärkung die Klebstelle umgeben oder kann teilweise mit der Klebstelle überlappen.

Idealerweise ist ein Ring ausgeformt, der sich im gesamten Umfang nach innen zur Achse des Behälters hin erstreckt. Dieser weist dabei bspw. ich eine eher zylindrisch flache Topfläche auf. Dabei bleibt die äußere Oberfläche des Behälters ungestört bzw. unbeeinflusst von der Materialverstärkung. D.h. sie ist zylindrisch oder gewölbt, auch kann sich ein gestalterisches Muster, wie Rillen, Strukturen oder Formen einfach in dem verstärkten Wandbereich nach außen hin unbeeinflusst fortsetzen.

Gerade bei Klebstellen, die eine größere Fläche einnehmen, kann es sich als sinnvoll erweisen, die Wandverstärkung z. B. nur im Außenbereich der Klebstelle anzubringen. Eine solche Ausführung verstärkt den Widerstand der Behälterwand, also die Klebstelle z.B. kreisringförmig umgebend, ausreichend gegen die Kräfte, die beim Herauslösen des Behälters aus dem Gebinde auftreten, bei gleichzeitig minimalem Materialeinsatz.

Für besondere Anwendungsfälle kann die Wandverstärkung auch neben der Klebstelle, unmittelbar angrenzend oder teilweise überlappend ausgebildet sein, beispielsweise dann, wenn beim Herauslösen des Behälters aus einem Gebinde in der Umgebung der Klebstelle Spannungsspitzen auftreten, die häufig zum Zerreißen des Behälters führen.

Erfindungsgemäß ist der Übergang von der Wandverstärkung zur Behälterwand als sich verjüngender Übergangsbereich ausgestaltet. Ein solcher Übergangsbereich mit sich verjüngender Wandstärke vermeidet das Entstehen von Spannungsspitzen beim Herauslösen eines Behälters aus dem Gebinde und gewährleistet so auch bei geringern Wandverstärkung bereits, dass ein Zerreißen des Behälters verhindert wird.

Das erfindungsgemäße Verfahren zum Herstellen eines Gebindes mit mindestens zwei Behältern, wobei mindestens ein Behälter einen verstärkten Wandabschnitt aufweist, sieht folgende Schritte vor:
- Bereitstellen eines Vorformlings für einen Behälter, der an einer vorgegebenen Stelle einen verstärkten Materialauftrag aufweist,
- Herstellen eines ersten Behälters aus dem Vorformling, wobei der erste Behälter an der Stelle des verstärkten Materialauftrags eine Wandverstärkung aufweist,
- Ausrichten des ersten Behälters bezogen auf eine Vorrichtung zum Auftragen von Klebstoff, so, dass der Klebstoff zum Erzeugen eines Klebepunkts auf die Wandverstärkung oder daran angrenzend aufgetragen wird und
- Fügen eines zweiten Behälters durch Anpressen an den Klebepunkt des ersten Behälters.

Das erfindungsgemäße Verfahren sieht vor, dass bereits bei der Bereitstellung von Vorformlingen für Behälter diese Vorformlinge an vorgegebenen Stellen einen verstärkten Materialauftrag aufweisen. Der verstärkte Materialauftrag kann erreicht werden durch Auflegen von Materialabschnitten, wobei die zusätzlich auf den Vorformling aufgelegten Materialabschnitte bevorzugt aus demselben Material sind wie der Vorformling bzw. die daraus entstehende Behälterwand, typisch z. B. Poylethylenterephtalat (PET). Der aufgelegte Materialabschnitt ist vorzugsweise dünner als die Materialstärke des Vorformlings, kann aber, falls erforderlich, auch stärker sein. Nach einer vorteilhaften Ausführung des erfindungsgemäßen Verfahrens wird der zusätzliche Materialabschnitt auf dem Vorformling an vorgegebener Stelle fixiert, z. B. indem integral mit der Fertigung des Vorformlings, z.B. durch Gießen oder Spritzen an der vorgegebenen Stelle mehr Material aufgetragen wird. Alternativ kann der Materialabschnitt auch mit dem Material des Vorformlings verklebt oder verschweißt werden. Aus dem Vorformling wird dann auf an sich bekannte Weise ein Behälter hergestellt. Dieser Behälter weist dann eine Behälterwand auf, die abschnittsweise mit einer Wandverstärkung versehen ist, und zwar an der Stelle, an der der Vorformling eine Stelle verstärkten Materialauftrags hatte.

Erfindungsgemäß wird der Behälter, der eine Behälterwand mit Wandverstärkung aufweist, nun so ausgerichtet, dass die Mittel zum Aufbringen von Klebstoff, typisch einen Düse, den Klebstoff auf oder angrenzend an die Wandverstärkung aufträgt. Das Ausrichten der Behälter erfolgt durch an sich bekannte Mittel zum Rotieren von Behältern. Sensoren, die eine unterschiedliche Materialstärke in der Behälterwand detektieren können, sind ebenfalls bekannt.

Anschließend wird der erste Behälter, der einen Klebepunkt auf oder in der Nähe einer Wandverstärkung aufweist, mit einem zweiten Behälter gefügt, üblicherweise, in dem die Behälter z. B. durch Klemmleisten aneinander gedrückt werden und -falls erforderlich- der Klebstoff, der nun an beiden Behältern anliegt, ausgehärtet oder vernetzt wird.

Nach einer vorteilhaften Ausführung der Erfindung weist auch der zweite Behälter, auf den kein Klebepunkt aufgebracht wird, trotzdem eine Wandverstärkung auf, da die Kräfte, die zum Zerreißen des Behälters führen, nicht nur auf den Behälter einwirken, auf den der Klebepunkt aufgetragen wurde, der dann als Klebstelle den ersten und den zweiten Behälter verbindet. Bei dieser Ausführung der Erfindung ist auch der zweite Behälter vor dem Fügen so auszurichten, das dessen Wandverstärkung oder an die Wandverstärkung angrenzende Bereiche der Behälterwand an den Klebepunkt auf dem ersten Behälter gedrückt wird.

Das Erzeugen einer Klebestelle zwischen zwei Behältern aus einem auf einen Behälter aufgebrachten Klebepunkt aus Klebstoff erfolgt durch Andrücken oder Anpressen der beiden Behälter aneinander, wobei der Klebstoff des Klebepunkts die beiden Behälter an einer Klebestelle verbindet. Klebstoff im Sinne der Erfindung ist jeder Werkstoff - sind alle Materialien oder Massen-, die zum Herstellen einer Klebeverbindung zwischen Behältern geeignet sind, insbesondere solche Werkstoffe, Materialien oder Massen, die, im flüssigen oder zähflüssigen Zustand aufgebracht, einen selbstklebenden Klebepunkt bilden, aber auch solche Werkstoffe, Materialien oder Massen, die durch Energieeintrag, z. B. durch Aufbringen von Druck, Strahlung oder Temperatur oder mittels chemischem Aushärten bzw. Vernetzen eine Klebestelle aufbauen. Typische Klebstoffe sind UV-härtende Klebstoffe, die auch in niedrigviskosem Zustand verarbeitet und durch Strahlung ausgehärtet werden können, oder ein Heißleim, der nach dem Auftragen abkühlt, und der unterhalb einer materialtypischen Temperatur seine Klebkraft verliert, so dass Heißleim nur für die unmittelbare Erzeugung einer Klebstelle geeignet ist. Klebstoff im Sinne der Erfindung sind auch Mehrschichtmaterialien, z. B. solche aus wenigstens einem Trägermaterial, das so mit einem Klebstoff beschichtet ist, dass eine Klebstelle zwischen zwei Behältern herstellbar ist. Typisch sind diese Mehrschichtmaterialien als Pads ausgebildet, die zweiseitig haftend oder klebend ausgebildet sind.

Ein mit einem Klebepunkt ausgebildeter Behälter weist also Klebstoff auf, der punkt-oder linienförmig oder in einem Muster aus Punkte und/oder Linien aufgetragen ist. Bevorzugt wird ein Klebstoff ausgewählt, dessen Klebkraft ein Lösen des Behälters aus einem Gebinde von Hand ermöglicht. Insbesondere UV-härtende Klebstoffe sind geeignet, weil die Klebkraft, die der Klebstoff an der Klebstelle entwickelt, durch die Zusammensetzung des Klebstoffs und die Intensität der Aushärtung gut eingestellt werden kann.

Die erfindungsgemäßen Gebinde sind durch Klebstellen miteinander verbunden. Bevorzugt verbinden die Klebstellen die Gebinde unmittelbar miteinander. Weiter bevorzugt stellen die Klebstellen die ausschließliche oder alleinige Verbindung der Behälter eines Gebindes dar. Es ist aber nach einer vorteilhaften Ausführung auch möglich, dass ein Gebinde an seinem oberen Ende mit einer Transportsicherung, insbesondere mit einer bandförmigen Transportsicherung versehen ist. Nach einer weiter bevorzugten Ausführung der Erfindung kann die Transportsicherung zu einer Tragschlaufe verlängert werden. Bevorzugt sind die Klebpunkte und die daraus entstehenden Klebstellen so klein wie möglich ausgelegt, um Klebstoff zu sparen.

Das Auftragen des Klebstoffs erfolgt in an sich bekannter Weise durch Düsen, die den meist flüssigen Klebstoff unmittelbar auf einen Behälter zu einem oder mehreren Klebepunkt aufbringen oder aufsprühen. Nach dem Auftragen des Klebstoffs werden die Behälter gefügt, z. B. durch das Einwirken von Klemmleisten, die mehrere Behälter in Anlage bringen, so dass an den Stellen, wo ein Klebepunkt auf einem ersten Behälter aufgebracht ist, durch Anliegen eines zweiten Behälters ohne Klebepunkt eine Klebstelle entsteht. Der zweite Behälter kann ebenfalls einen Klebepunkt aufweisen an der Stelle, an der der erste Behälter in Anlage kommt, so dass eine Klebstelle aus zwei Klebepunkten aufgebaut sein kann.

Details der Erfindung werden an Hand von Ausführungsbeispielen erläutert. Es zeigen:
Fig. 1 eine nicht-maßstäbliche Darstellung eines Behälters mit einer punktuellen Wandverstärkung im Längsschnitt,
Fig. 2 eine Darstellung eines Behälters mit einer kreisringförmigen Wandverstärkung an einem Abrollring im Längsschnitt.

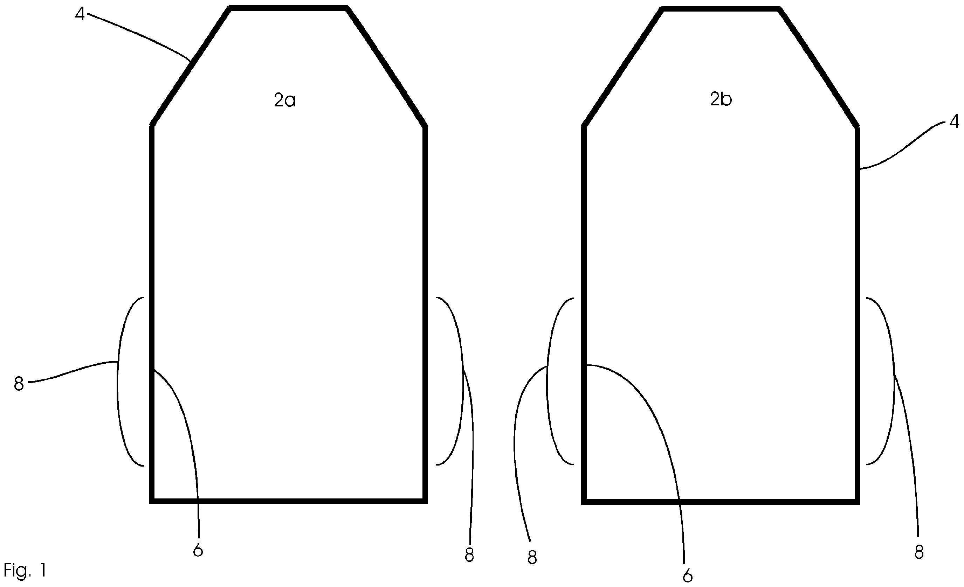

Fig. 1 zeigt zwei zylindrische Behälter, Flaschen 2a, 2b, aus PET (Polyethylenterephtalat) mit jeweils einer Behälterwand 4, die eine Wandstärke von 0,15 mm aufweist. An dem Wandabschnitt 6, wo auf die Flasche 2 ein Klebepunkt zur Herstellung einer Klebstelle aufgebracht werden soll, wurde durch Aufbringen einer Wandverstärkung 8 (hier zur deutlicheren Darstellung nicht proportional wiedergegeben) die Wandstärke von 0,15 mm auf 0,2 mm verstärkt. Mit dieser Verstärkung um 30%, bezogen auf die Wandstärke des Behälters, soll verhindert werden, dass die PET-Flasche 2a, die durch die aufzubringende Klebstelle mit einer zweiten Flasche 2b, zu einem Gebinde verbunden wird, beim Herauslösen aus dem Gebinde nicht beschädigt wird. Die Wandverstärkung 8 ist etwa auf halber Höhe der Flaschen 2a, 2b angebracht.

Die Wandverstärkung 8 ist als runde Fläche ausgebildet, deren Durchmesser um 10% größer ist als der aufzubringende Klebepunkt, aus dem nach dem Fügen des Gebindes die Klebstelle wird, mittels der die Flaschen 2a, 2b miteinander verbunden sind. Die Fläche der Wandverstärkung 8 ist damit um deutlich mehr als 3% größer als die Fläche der Klebstelle. Die Wandverstärkung 8 ist nach Art einer runden Linse mit einem abflachenden Randbereich aufgebracht. Auf diese Weise werden beim Lösen der Flasche 2a von der Flasche 2b Spannungsspitzen vermieden, die zum Zerreißen der Flasche führen könnten.

Um weitere Flaschen mit den Flaschen 2a, 2b zu einem Gebinde fügen zu können, sind je Flasche 2a, 2b jeweils zwei Wandverstärkungen 8 an entgegen gesetzten Seiten der Flaschen 2a, 2b angebracht. Da die Wandverstärkungen 8 als punktuelle, Material sparende Flächen aufgebracht sind, ist es erforderlich, die Flaschen 2a, 2b vor dem Aufbringen eines Klebepunkts so auszurichten, dass der Klebepunkt auf die Wandverstärkung 8 aufgebracht wird, um den erfindungsgemäß gewünschten Effekt zu erzielen. Soll die Klebestelle an jeder der beiden miteinander verbundenen Flaschen an einer Wandverstärkung anliegen, so sind die zu fügenden Flaschen 2a, 2b vor dem Fügen so auszurichten, dass punktuell aufgetragene Wandverstärkungen zur Anlage kommen.

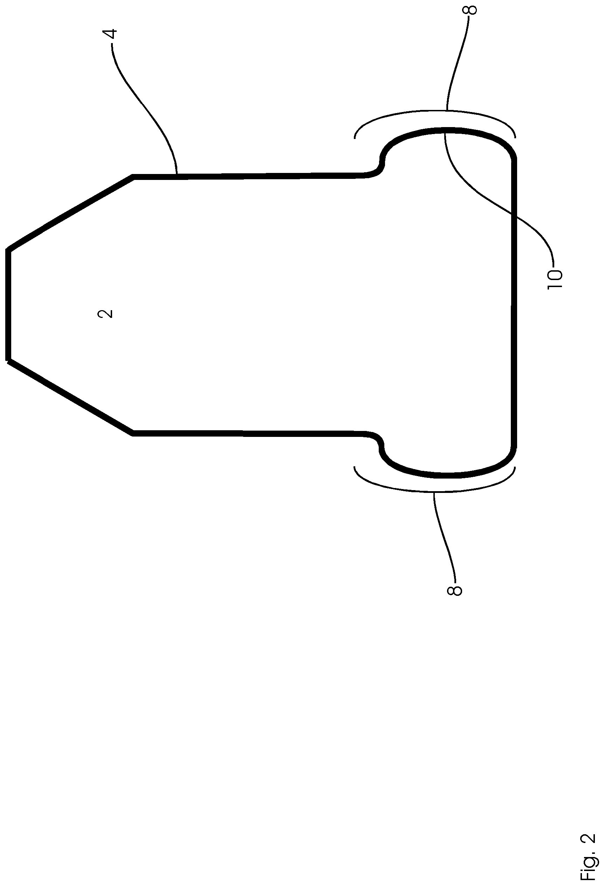

Fig. 2 zeigt eine Flasche 2 mit einer Behälterwand 4, an deren unteren Ende ein Abrollring 10 ausgeformt ist. Der Abrollring 10 ist umlaufend um die zylindrische Flasche 2 ausgeführt und weist einen größeren Außendurchmesser als andere zylindrische Wandabschnitte 6 der Flasche 2 auf, jedoch weist die Behälterwand 4 im Bereich des Abrollrings 10 keine größere Wandstärke auf. Die Behälterwand 4 weist durchgehend eine Materialstärke von 0,15 mm auf, das verwendete Material ist PET. Am Abrollring 10 soll ein Klebepunkt zur Erzeugung einer Klebstelle angebracht werden. Aufgrund der besonders großen Hebelkräfte, die am unteren Ende der Flasche 2 wirken, wird der Abrollring 10 durch zusätzlich aufgebrachtes Material, ebenfalls PET, mit einer Wandverstärkung 8 versehen, die eine um 40% größere Wandstärke aufweist als die Behälterwand 4. Die in Fig. 2 gezeigte Wandverstärkung 8 ist umlaufend angebracht. Dadurch ist zwar mehr Material einzusetzen als bei einer punktuell aufgebrachten Materialverstärkung, allerdings kann die Flasche 2 gemäß Fig. 2 ohne vorheriges Ausrichten in jeder gewünschten Position mit einem Klebepunkt zum Herstellen einer Klebestelle versehen werden, was die Manipulation der Flasche 2 vereinfacht.

Der erfindungsgemäß zur Herstellung des Gebindes verwendete Behälter 2 wird hergestellt, in dem ein Vorformling erzeugt wird, der, z. B. aus PET oder anderen Kunststoffen hergestellt ist. Wird der Vorformling beispielsweise mittels eines Gussverfahrens aus flüssigem Kunststoff erzeugt, so kann die Gussform Ausnehmungen oder Vertiefungen aufweisen, die dazu führen, dass beim Einbringen von PET in die Gussform Abschnitte entstehen, an denen die Behälterwand 4 eine größere Wandstärke aufweist im Vergleich zur Wandstärke anderer Abschnitte der Behälterwand 4. Diese Abschnitte verstärkter Wandstärke, kurz als Wandverstärkung 8 bezeichnet, können punktuell oder flächig, beispielsweise umlaufend, etwa kreisringförmig, ausgebildet sein. Die Abmessungen der Wandverstärkung 8 werden in Abhängigkeit von den aufzubringenden Klebepunkten berechnet, sie weist einen größeren Durchmesser auf als die aufzubringenden Klebepunkte, typisch einen um etwa 10% größeren Durchmesser, hier: eine um 10% größerer Höhe als die Klebstelle. Die Form der Ausnehmungen ist so gestaltet, dass ein sich verjüngender Randbereich an der Wandverstärkung 8 ausgebildet wird, der von der maximalen Stärke der Wandverstärkung 8 ausgehend bis auf die Wandstärke der umgebenden Behälterwand 4 abnimmt.

Alternativ kann auch zusätzliches Material in die Vertiefungen oder Ausnehmungen einer Form eingesetzt werden, auf die dann das Material der Behälterwand 4 aufgebracht wird. Das zusätzliche Material und das Material der Behälterwand 4 werden dann miteinander verklebt oder verschmolzen, so dass die Behälterwand 4 mindestens eine Wandverstärkung 8 aufweist. Dieses alternative Verfahren ist aufwändiger als die zuvor erläuterte Verfahrensweise, sie kann aber im Einzelfall zweckmäßig sein, z. B. wenn das Material der Wandverstärkung 8 nicht identisch ist mit dem Material der Behälterwand 4.

Die Vorformlinge werden dann zu Behältern 2 geformt, die an vorgegebenen Stellen eine oder mehrere Wandverstärkungen 8 aufweisen. Das erfindungsgemäße Gebinde wird weiter hergestellt, indem die Behälter 2, z. B. durch Rotation, so auf Mittel zum Aufbringen von Klebstoff ausgerichtet werden, dass z. B. durch eine Düse flüssiger Klebstoff als Klebepunkt auf die Wandverstärkung 8 des Behälters 2 aufgetragen wird. Zum Erzeugen des Gebindes wird ein zweiter Behälter 2 an den ersten Behälter 2 gefügt, beispielsweise durch Klemmleisten angedrückt, so dass die Behälterwand 4 des zweiten Behälters 2 an dem Klebepunkt des ersten Behälters 2 anliegt, so dass beim Aushärten oder Vernetzen des Klebstoffs eine Klebstelle entsteht, die die beiden Behälter 2 zu einem Gebinde verbindet. Das Aushärten oder Vernetzen kann je nach Art des verwendeten Klebstoffs durch eine oder mehrere Maßnahmen erfolgen, die das Abkühlen, das Trocknen, das Erwärmen oder beispielsweise auch das Einwirken von Strahlung umfassen.

Nach einer vorteilhaften Ausführung der Erfindung weist auch der zweite Behälter 2 an der Klebestelle eine Wandverstärkung 8 auf.

### Bezugszeichenliste

- 2: Flasche / Behälter
- 4: Behälterwand
- 6: Wandabschnitt
- 8: Wandverstärkung
- 10: Abrollring

## Patentansprüche

1. Gebinde, aufweisend mindestens zwei Behälter (2) mit jeweils einer Behälterwand (4), wobei die zwei Behälter (2) durch eine Klebstelle miteinander verbunden sind, wobei jeweils eine Behälterwand (4) eines Behälters (2) im Bereich der Klebstelle oder angrenzend an die Klebstelle eine Wandverstärkung (8) in Form einer größeren Querschnittswandstärke aufweist,
**dadurch gekennzeichnet, dass**
der Übergang von der Wandverstärkung (8) zur Behälterwand (4) als sich verjüngender Wandabschnitt ausgebildet ist.

2. Gebinde nach Anspruch 1, **dadurch gekennzeichnet, dass** die Wandverstärkung (8) als Ring oder Kranz ausgebildet ist, der sich um den gesamten Behälterumfang erstreckt.

3. Gebinde nach Anspruch 1 oder 2, **dadurch gekennzeichnet, dass** die Wandverstärkung (8) eine gegenüber der Behälterwand (4) um mindestens 5%, vorzugsweise um mindestens 10%, bevorzugt um mindestens 30%, vorteilhaft um mindestens 50% größere Stärke aufweist.

4. Gebinde nach mindestens einem der vorstehenden Ansprüche, **dadurch gekennzeichnet, dass** der Durchmesser der Wandverstärkung (8) mindestens 3% größer ist als der Durchmesser der Klebstelle, vorzugsweise mindestens 5% größer, bevorzugt mindestens 10% vorteilhaft mindestens 15% größer als der Durchmesser der Klebstelle.

5. Gebinde nach mindestens einem der vorstehenden Ansprüche, **dadurch gekennzeichnet, dass** die Fläche der Wandverstärkung (8) mindestens 3% größer ist als die Fläche der Klebstelle.

6. Gebinde nach mindestens einem der vorstehenden Ansprüche, **dadurch gekennzeichnet, dass** die Wandverstärkung (8) flächig oder rahmenförmig, rund oder eckig ausgeführt ist, idealerweise als plateauartige Erhebungen mit kreisförmige oder ovale Grundfläche.

7. Gebinde nach einem der vorstehenden Ansprüche, **dadurch gekennzeichnet, dass** die sich Wandverstärkung radial nach innen in Richtung der Behälterhochachse erstreckt.

8. Verfahren zum Herstellen eines Gebindes mit mindestens zwei Behältern (2) mit mindestens einem verstärkten Wandabschnitt, insb. gemäß einem der vorgenannten Ansprüche, mit den Schritten
- Zuführen und Bereitstellen der Behälter (2) an eine Maschine zum Klebemittelapplikation,
- Ausrichten der Behälter (2) bezogen auf eine Vorrichtung zum Auftragen
von Klebstoff, sodass der Klebstoff zum Erzeugen eines Klebepunkts auf die Wandverstärkung (8) oder daran angrenzend aufgetragen wird,
- Fügen der Behälter (2) durch formiertes Halten und Anpressen, **gekennzeichnet durch**
- Bereitstellung von Vorformlingen für Behälter (2), die an einer vorgegebenen Stelle einen verstärkten Materialauftrag aufweist,
- Herstellen der Behälters (2) aus den Vorformlingen und
- Transport der Behälter (2) zu der Maschine zur Klebemittelapplikation.

## Claims

1. Cluster pack, comprising at least two containers (2), each having a container wall (4), wherein the two containers (2) are connected to each other by an adhesive point, wherein in each case a container wall (4) of a container (2) exhibits in the region of the adhesive point or adjacent to the adhesive point a wall reinforcement (8) in the form of a larger cross-section wall thickness,
**characterised in that**
the transition from the wall reinforcement (8) to the container wall (4) is configured as a tapering wall section.

2. Cluster pack according to claim 1, **characterised in that** the wall reinforcement (8) is configured as a ring or rim, which extends over the entire circumference of the container.

3. Cluster pack according to claim 1 or 2, **characterised in that** the wall reinforcement (8) exhibits a thickness which is greater in relation to the container wall (4) by at least 5%, preferably by at least 10%, for particular preference at least 30%, and advantageously by at least 50%.

4. Cluster pack according to any one of the preceding claims, **characterised in that** the diameter of the wall reinforcement (8) is at least 3% greater than the diameter of the adhesive point, preferably at least 5% greater, for particular preference at least 10% greater, and advantageously at least 15% greater than the diameter of the adhesive point.

5. Cluster pack according to any one of the preceding claims, **characterised in that** the surface area of the wall reinforcement (8) is at least 3% larger than the surface area of the adhesive point.

6. Cluster pack according to any one of the preceding claims, **characterised in that** the wall reinforcement (8) is configured as flat or frame-shaped, circular or angular, and ideally as plateau-like elevations with circular or oval basic surfaces.

7. Cluster pack according to any one of the preceding claims, **characterised in that** the wall reinforcement extends radially inwards in the direction of the container vertical axis.

8. Method for producing a cluster pack with at least two containers (2), with at least one reinforced wall section, in particular according to any one of the preceding claims, with the steps:
- Delivery and presentation of the containers (2) to a machine for the application of an adhesive medium,
- alignment of the containers (2) in relation to a device for the application of adhesive, such that the adhesive is applied for producing an adhesive point onto the wall reinforcement (8) or adjacent to it,
- joining of the containers (2) by holding in an appropriate shape and pressing,
**characterised in that**
- the provision of performs for containers (2), which exhibit a reinforced application of material at a predetermined point,
- production of the containers (2) from the performs, and
- transport of the containers (2) to the machine for the application of adhesive.

## Revendications

1. Unité d'emballage présentant au moins deux contenants (2) avec respectivement une paroi de contenant (4), dans laquelle les deux contenants (2) sont reliés l'un à l'autre par un emplacement de collage, dans laquelle respectivement une paroi de contenant (4) d'un contenant (2) présente, dans la zone de l'emplacement de collage ou de manière contiguë à l'emplacement de collage, un renforcement de paroi (8) sous la forme d'une épaisseur de paroi en section transversale plus importante,
**caractérisée en ce que**
la transition du renforcement de paroi (8) vers la paroi de contenant (4) est réalisée en tant que section de paroi se rétrécissant.

2. Unité d'emballage selon la revendication 1, **caractérisée en ce que** le renforcement de paroi (8) est réalisé en tant qu'anneau ou couronne, qui s'étend autour de la totalité de la périphérie de contenant.

3. Unité d'emballage selon la revendication 1 ou 2, **caractérisée en ce que** le renforcement de paroi (8) présente une épaisseur plus importante par rapport à la paroi de contenant (4) d'au moins 5 %, de préférence d'au moins 10 %, de manière préférée d'au moins 30 %, de manière avantageuse d'au moins 50 %.

4. Unité d'emballage selon au moins l'une quelconque des revendications précédentes, **caractérisée en ce que** le diamètre du renforcement de paroi (8) est au moins 3 % plus important que le diamètre de l'emplacement de collage, de préférence au moins 5 % plus grand, de manière préférée au moins 10 %, de manière avantageuse au moins 15% plus grand que le diamètre de l'emplacement de collage.

5. Unité d'emballage selon au moins l'une quelconque des revendications précédentes, **caractérisée en ce que** la surface du renforcement de paroi (8) est au moins 3 % plus importante que la surface de l'emplacement de collage.

6. Unité d'emballage selon au moins l'une quelconque des revendications précédentes, **caractérisée en ce que** le renforcement de paroi (8) est réalisé à plat ou en forme de cadre, de manière ronde ou angulaire, idéalement en tant que parties surélevées de type plateau avec une surface de base de forme circulaire ou ovale.

7. Unité d'emballage selon l'une quelconque des revendications précédentes, **caractérisée en ce que** le renforcement de paroi s'étend radialement vers l'intérieur en direction de l'axe vertical de contenant.

8. Procédé de fabrication d'une unité d'emballage avec au moins deux contenants (2) avec au moins une section de paroi renforcée, en particulier selon l'une quelconque des revendications précédentes, avec les étapes
- d'amenée et de fourniture des contenants (2) à une machine pour l'application de produit adhésif,
- d'orientation des contenants (2) par rapport à un dispositif d'application de colle si bien que la colle est appliquée sur le renforcement de paroi (8) ou de manière contiguë à celui-ci pour produire un point de collage,
- d'assemblage des contenants (2) par maintien et compression de rassem blement,
**caractérisé par**
- la fourniture de préformes pour des contenants (2), qui présentent sur un emplacement prédéfini une application de matériau renforcée,
- la fabrication des contenants (2) à partir des préformes, et
- le transport des contenants (2) vers la machine pour l'application de produit adhésif.
